# EUROPEAN PATENT APPLICATION

(11) **EP 4 752 043 A1**
(43) Date of publication of application: **03.06.2026**
(21) Application number: 25214176.7
(22) Date of filing: 07.11.2025
(51) Int. Cl.: B62M 25/08, B62M 9/122, B62M 9/123, B62M 9/132, B62M 9/133, B62J 45/41, B62J 45/411, B62J 45/412, B62J 45/415, G08G 1/16

(54) **CONTROL APPARATUS AND CONTROL METHOD**

(30) Priority: 29.11.2024 JP 2024209065
(71) Applicant: Robert Bosch GmbH, 70442 Stuttgart (DE)
(72) Inventor: Fukumashi, Yuki, Yokohama-shi, Kanagawa 2248501 (JP)
(74) Representative: Isarpatent

(57) **Abstract**

The present invention obtains a control apparatus and a control method capable of assisting a rider in driving a bicycle including a transmission. A control apparatus (30) and a control method according to the invention are a control apparatus (30) and a control method for controlling behavior of a bicycle (1) including a transmission (19). An execution unit of the control apparatus (30) executes gear ratio adjustment operation of automatically adjusting a gear ratio of the transmission (19) to be a target gear ratio. The execution unit starts execution of the gear ratio adjustment operation based on surrounding environment information in front of the bicycle (1).

## Description

### BACKGROUND OF THE INVENTION

### 1. Field of the Invention

The present disclosure relates to a control apparatus and a control method capable of assisting a rider in driving a bicycle including a transmission.

### 2. Description of the Background Art

As a technique in the related art related to a straddle-type vehicle such as a motorcycle, there is a technique of assisting a rider. For example, JP2009-116882A discloses a driver assistance system that warns a rider of a motorcycle of inappropriately approaching an obstacle based on information detected by a sensor device that detects an obstacle in a running direction or substantially in a running direction.

### SUMMARY OF THE INVENTION

The straddle-type vehicle includes a bicycle. Some bicycles include transmissions. In a bicycle including a transmission, a gear ratio of the transmission is adjusted to adjust pedaling force applied by the rider (that is, force to depress a pedal), and thus the ease of driving can be improved. However, when the gear ratio of the transmission is an inappropriate gear ratio that does not match the situation, it may rather cause difficulty in driving. Therefore, in order to solve such a problem, it is desired to assist the rider in driving.

The present invention has been made in view of the above problems, and provides a control apparatus and a control method capable of assisting a rider in driving a bicycle including a transmission.

A control apparatus according to the invention is a control apparatus that controls behavior of a bicycle including a transmission. The control apparatus includes an execution unit. The execution unit executes gear ratio adjustment operation of automatically adjusting a gear ratio of the transmission to be a target gear ratio. The execution unit starts execution of the gear ratio adjustment operation based on surrounding environment information in front of the bicycle.

A control method according to the invention is a method for controlling behavior of a bicycle including a transmission. The method includes the steps of executing by an execution unit of a control apparatus gear ratio adjustment operation of automatically adjusting a gear ratio of the transmission to be a target gear ratio, and starting by the execution unit the executing the gear ratio adjustment operation based on surrounding environment information in front of the bicycle.

A control apparatus and a control method according to the invention are a control apparatus and a control method for controlling behavior of a bicycle including a transmission. An execution unit of the control apparatus executes gear ratio adjustment operation of automatically adjusting a gear ratio of the transmission to be a target gear ratio. The execution unit starts execution of the gear ratio adjustment operation based on surrounding environment information in front of the bicycle. Accordingly, the gear ratio of the transmission can be optimized in accordance with the situation in front of the bicycle. In this manner, with the control apparatus and the control method according to the invention, it is possible to assist a rider in driving the bicycle including the transmission.

### BRIEF DESCRIPTION OF THE DRAWINGS

Fig. 1 is a schematic diagram illustrating a schematic configuration of a bicycle according to an embodiment of the invention.
Fig. 2 is a block diagram illustrating one example of a functional configuration of a control apparatus according to an embodiment of the invention.
Fig. 3 is a flowchart illustrating one example of a flow of processing executed by the control apparatus according to an embodiment of the invention.

### DETAILED DESCRIPTION OF THE INVENTION

Hereinafter, a control apparatus and a control method according to the present invention are described with reference to the drawings.

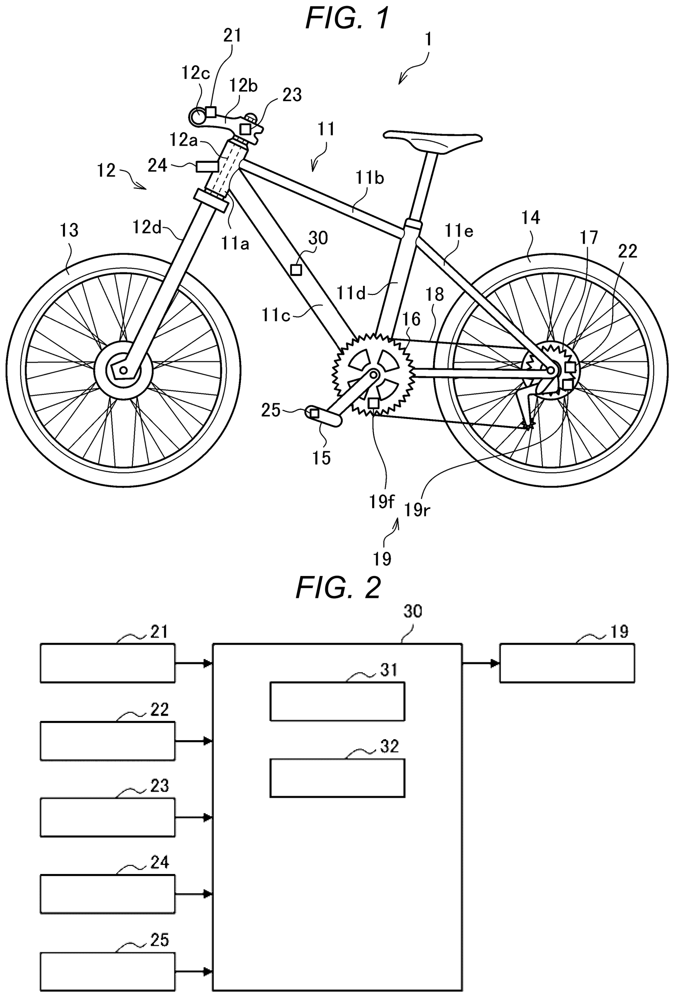

Although one example of the bicycle to be controlled by the control apparatus is described below with reference to Fig. 1, the bicycle to be controlled by the control apparatus according to the invention may be a bicycle other than a bicycle 1 illustrated in Fig. 1. A bicycle refers to a vehicle that is capable of propelling on a road by pedaling force applied by a rider to pedals. The bicycle includes an ordinary bicycle, a power assisted bicycle, and an electric bicycle.

Configurations, operation, and the like described below are merely illustration, and the control apparatus and the control method according to the invention are not limited to those with such configurations, operation, and the like.

Below, the same or similar description will be simplified or omitted as appropriate. Among the respective drawings, for the same or similar members or parts, denotation of reference signs thereto may be omitted or the same reference signs may be given thereto. Further, illustration of detailed structures is simplified or omitted as appropriate.

### Configuration of Bicycle

A configuration of the bicycle 1 according to an embodiment of the invention is described.

Fig. 1 is a schematic diagram illustrating a schematic configuration of the bicycle 1. As illustrated in Fig. 1, the bicycle 1 includes a frame 11, a turning unit 12, a front wheel 13, a rear wheel 14, a pedal 15, a front gear 16, a rear gear 17, a chain 18, a transmission 19, an input device 21, a speed sensor 22, an inertial measurement unit (IMU) 23, a surrounding environment sensor 24, a pedaling force sensor 25, and a control apparatus (ECU) 30.

The frame 11 includes, for example, a head tube 11a, a top tube 11b, a down tube 11c, a seat tube 11d, and a stay 11e. The head tube 11a pivotally supports a steering column 12a of the turning unit 12 described later. The top tube 11b and the down tube 11c are each coupled to the head tube 11a. The seat tube 11d is bridged between the top tube 11b and the down tube 11c and holds a saddle. The stay 11e is coupled to upper and lower ends of the seat tube 11d and holds the rear wheel 14.

The turning unit 12 includes the steering column 12a, a handlebar stem 12b, a handlebar 12c, and a front fork 12d. The steering column 12a is pivotally supported by the head tube 11a while being rotatable with respect to the head tube 11a. The handlebar stem 12b is held by the steering column 12a. The handlebar 12c is held by the handlebar stem 12b. The front fork 12d is coupled to the steering column 12a. The front wheel 13 is rotatably held by the front fork 12d. The front fork 12d is provided on both sides of the front wheel 13. One end of the front fork 12d is coupled to the steering column 12a, and the other end of the front fork 12d is coupled to a rotation center of the front wheel 13. That is, the front wheel 13 is rotatably held between a pair of front forks 12d. The front fork 12d may be a front fork with a suspension.

The pedal 15 is rotated by being depressed by the rider of the bicycle 1 with a foot. The pedal 15 is provided, for example, at a lower end of the seat tube 11d (that is, a coupling portion between the down tube 11c, the seat tube 11d, and the stay 11e), and is rotatable with respect to the frame 11. The front gear 16 is rotatable about a rotation axis coaxial with a rotation center of the pedal 15, and rotates integrally with the pedal 15. The rear gear 17 is rotatable about a rotation axis coaxial with a rotation center of the rear wheel 14, and rotates integrally with the rear wheel 14. The chain 18 is bridged between the front gear 16 and the rear gear 17. The chain 18 is engaged with teeth of the front gear 16 and teeth of the rear gear 17. Therefore, the front gear 16, the rear gear 17, and the chain 18 are interlocked with one another.

When the pedal 15 is rotated by pedaling force applied by the rider, the front gear 16 rotates integrally with the pedal 15. When the front gear 16 rotates, the chain 18 rotates in an interlocking manner with the front gear 16, and the rear gear 17 rotates in an interlocking manner with the chain 18. Accordingly, the rear wheel 14 rotates integrally with the rear gear 17. In this way, the pedaling force applied to the pedal 15 is transmitted to the rear wheel 14 via the front gear 16, the chain 18, and the rear gear 17. Therefore, the rider can propel the bicycle 1 by pedaling the pedals 15 with the feet.

The transmission 19 changes a rotational frequency and torque of power transmitted from the pedal 15 to the rear wheel 14. For example, the transmission 19 includes a front-gear switching device 19f and a rear-gear switching device 19r.

The bicycle 1 includes a plurality of gears having different numbers of teeth as the front gear 16. The front-gear switching device 19f switches a gear on which the chain 18 is laid among the plurality of gears. Accordingly, the front-gear switching device 19f can switch the number of teeth of the front gear 16 on which the chain 18 is laid.

Further, the bicycle 1 includes a plurality of gears having different numbers of teeth as the rear gear 17. The rear-gear switching device 19r switches a gear on which the chain 18 is laid among the plurality of gears. Accordingly, the rear-gear switching device 19r can switch the number of teeth of the rear gear 17 on which the chain 18 is laid.

The gear ratio of the transmission 19 is a ratio of the numbers of teeth of the front gear 16 and the rear gear 17, and is a value obtained by dividing the number of teeth of the front gear 16 by the number of teeth of the rear gear 17. That is, the gear ratio of the transmission 19 corresponds to a rotational frequency of the rear wheel 14 when the pedal 15 is rotated once.

As the gear ratio of the transmission 19 decreases, the torque of the power transmitted to the rear wheel 14 increases, but the rotational frequency of the power transmitted to the rear wheel 14 decreases. That is, as the gear ratio of the transmission 19 decreases, pedaling force required to accelerate the bicycle 1 decreases, but the speed of the bicycle 1 is less likely to increase. Therefore, for example, when the bicycle 1 starts or the speed of the bicycle 1 is low, a small gear ratio of the transmission 19 allows the bicycle 1 to be accelerated with small pedaling force, and thus the rider can easily drive the bicycle 1.

As the gear ratio of the transmission 19 increases, the rotational frequency of the power transmitted to the rear wheel 14 increases, but the torque of the power transmitted to the rear wheel 14 decreases. That is, as the gear ratio of the transmission 19 increases, the speed of the bicycle 1 easily increases, but the pedaling force required to accelerate the bicycle 1 increases. Therefore, for example, when the speed of the bicycle 1 is high, a large gear ratio of the transmission 19 allows the bicycle 1 to be accelerated without an increase in an operation amount of the pedal 15 (that is, a shift amount of the foot when pedaling the pedal 15). Thereby, the rider can easily drive the bicycle 1.

For example, the rider of the bicycle 1 can manually adjust the gear ratio of the transmission 19 by performing specific operation by using an operation part (not illustrated) provided to the bicycle 1.

The input device 21 receives various types of operation by the rider. The input device 21 includes, for example, a press button provided to the handlebar 12c and used for operation by the rider.

The speed sensor 22 detects the speed of the bicycle 1. For example, the speed sensor 22 is provided to the rear wheel 14 and detects the rotational frequency of the rear wheel 14. The speed sensor 22 can obtain the speed of the bicycle 1 based on a detection result of the rotational frequency of the rear wheel 14.

The inertial measurement unit 23 includes a three-axis gyro sensor and a three-directional acceleration sensor, and detects a posture of the bicycle 1. In the example of Fig. 1, the inertial measurement unit 23 is provided to the handlebar stem 12b. However, an installation position of the inertial measurement unit 23 is not limited to the example in Fig. 1. For example, the inertial measurement unit 23 detects a pitch angle of the bicycle 1 with respect to a horizontal direction and outputs the detection result. The inertial measurement unit 23 may detect another physical quantity that can substantially be convertible into the pitch angle of the bicycle 1 with respect to the horizontal direction. The pitch angle corresponds to an angle representing inclination of a body of the bicycle 1 in a longitudinal direction. Therefore, the pitch angle of the bicycle 1 with respect to the horizontal direction corresponds to an angle representing an amount of rotation of the body of the bicycle 1 with respect to the horizontal direction in a pitch direction. The pitch direction is a rotational direction about an axis in a vehicle left-right direction. The inertial measurement unit 23 may include only part of the three-axis gyro sensor and/or part of the three-direction acceleration sensor.

The surrounding environment sensor 24 detects surrounding environment information related to environment around the bicycle 1. Specifically, the surrounding environment sensor 24 is provided to a front portion of the bicycle 1 and detects the surrounding environment information in front of the bicycle 1. The surrounding environment information detected by the surrounding environment sensor 24 is output to the control apparatus 30.

The surrounding environment information detected by the surrounding environment sensor 24 may be information related to a distance or orientation to an object positioned around the bicycle 1 (for example, a relative position, a relative distance, relative speed, and relative acceleration), or may be features of the object positioned around the bicycle 1 (for example, a type of the object, a shape of the object itself, and a mark attached to the object). The surrounding environment sensor 24 is, for example, a radar, a Lidar sensor, an ultrasonic sensor, or a camera.

Note that the surrounding environment information may also be detected by a surrounding environment sensor mounted on another vehicle or infrastructure equipment. That is, the control apparatus 30 can also acquire the surrounding environment information via wireless communication with another vehicle or infrastructure equipment.

The pedaling force sensor 25 detects pedaling force acting on the pedal 15. For example, the pedaling force sensor 25 is a force sensor that is provided to the pedal 15 and detects force acting at the installation position.

The control apparatus 30 controls behavior of the bicycle 1. For example, part or the entirety of the control apparatus 30 may include, for example, a microcomputer or a microprocessor unit. In addition, for example, part or the entirety of the control apparatus 30 may include an updatable component such as firmware, or may be a program module that is executed via a command from a CPU or the like. For example, the control apparatus 30 may include a single control apparatus, or may include a plurality of divided control devices.

Fig. 2 is a block diagram illustrating one example of a functional configuration of the control apparatus 30. As illustrated in Fig. 2, the control apparatus 30 includes, for example, an acquisition unit 31 and an execution unit 32. The control apparatus 30 communicates with each device of the bicycle 1.

The acquisition unit 31 acquires information from each device of the bicycle 1 and outputs the information to the execution unit 32. For example, the acquisition unit 31 acquires information from the input device 21, the speed sensor 22, the inertial measurement unit 23, the surrounding environment sensor 24, and the pedaling force sensor 25. Note that, herein, acquisition of information may include extraction or generation (for example, calculation) of information and the like.

The execution unit 32 controls operation of each device of the bicycle 1. The execution unit 32 controls, for example, operation of the transmission 19.

### Operation of Control Apparatus

Operation of the control apparatus 30 according to an embodiment of the invention is described.

As described above, in this embodiment, the bicycle 1 includes the transmission 19. Therefore, in the bicycle 1, the gear ratio of the transmission 19 is adjusted to adjust the pedaling force applied by the rider, and thus the ease of driving can be improved. However, when the gear ratio of the transmission 19 is an inappropriate gear ratio that does not match the situation, it may rather cause difficulty in driving. For example, when the gear ratio of the transmission 19 is large at the time of starting the bicycle 1, pedaling force required to accelerate the bicycle 1 increases, and the rider has difficulty in driving.

Here, in this embodiment, the execution unit 32 of the control apparatus 30 executes gear ratio adjustment operation of automatically adjusting the gear ratio of the transmission 19 to be a target gear ratio. For example, the execution unit 32 can automatically adjust the gear ratio of the transmission 19 by controlling operation of the front-gear switching device 19f and the rear-gear switching device 19r of the transmission 19. Specifically, the execution unit 32 can control the operation of the front-gear switching device 19f to switch the number of teeth of the front gear 16 on which the chain 18 is laid. The execution unit 32 can control the operation of the rear-gear switching device 19r to switch the number of teeth of the rear gear 17 on which the chain 18 is laid. Accordingly, the execution unit 32 can automatically adjust the gear ratio of the transmission 19.

In this embodiment, the execution unit 32 starts execution of the gear ratio adjustment operation based on the surrounding environment information in front of the bicycle 1. Therefore, as will be described later, it can be suppressed that the rider has difficulty in driving due to an inappropriate gear ratio of the transmission 19 that does not match the situation, and thus assisting driving by the rider is realized. Below, an example of processing executed by the control apparatus 30 is described.

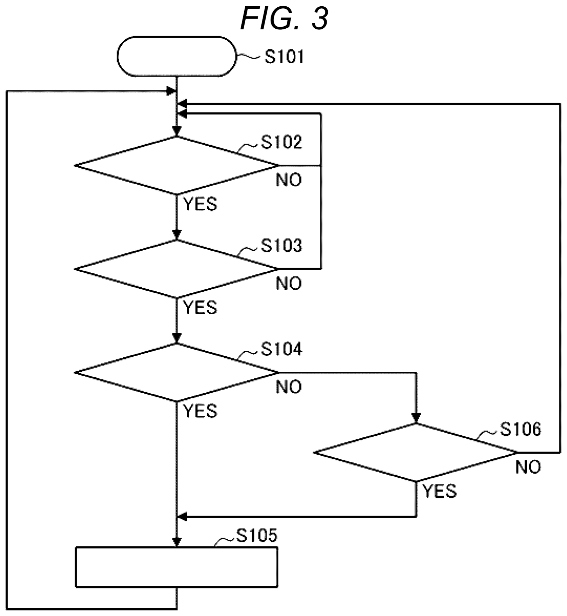

Fig. 3 is a flowchart illustrating one example of a flow of the processing executed by the control apparatus 30. The control flow illustrated in Fig. 3 starts, for example, after the bicycle 1 is powered on. Step S101 in Fig. 3 corresponds to a start of the control flow illustrated in Fig. 3.

Note that the example in Fig. 3 is an example in which the execution unit 32 executes downshift operation of automatically reducing the gear ratio of the transmission 19 as the gear ratio adjustment operation. However, as will be described later, the gear ratio adjustment operation may be upshift operation of automatically increasing the gear ratio of the transmission 19.

When the control flow illustrated in Fig. 3 starts, at Step S102, the execution unit 32 determines whether the gear ratio of the transmission 19 is larger than a target gear ratio for the downshift operation. Note that, as will be described later, the target gear ratio for the downshift operation is, for example, a smallest gear ratio among gear ratios that can be taken by the transmission 19.

For example, the acquisition unit 31 can acquire information indicating a current gear ratio of the transmission 19 from the transmission 19. Then, the execution unit 32 can determine whether the gear ratio of the transmission 19 is larger than the target gear ratio for the downshift operation based on the information acquired in this way.

If it is determined that the gear ratio of the transmission 19 is equal to or less than the target gear ratio for the downshift operation (Step S102/NO), Step S102 is repeated. On the other hand, if it is determined that the gear ratio of the transmission 19 is larger than the target gear ratio for the downshift operation (Step S102/YES), the process proceeds to Step S103.

If it is determined as YES at Step S102, at Step S103, the execution unit 32 determines whether the bicycle 1 is under deceleration.

For example, the acquisition unit 31 can acquire information indicating the speed of the bicycle 1 from the speed sensor 22. Then, the execution unit 32 can determine whether the bicycle 1 is under deceleration based on a history of the information acquired in this way.

If it is determined that the bicycle 1 is not under deceleration (Step S103/NO), the process returns to Step S102. On the other hand, if it is determined that the bicycle 1 is under deceleration (Step S103/YES), the process proceeds to Step S104.

If it is determined as YES at Step S103, at Step S104, the execution unit 32 determines whether a traffic light lit in red is present in front of the bicycle 1 based on the surrounding environment information in front of the bicycle 1.

For example, the acquisition unit 31 can acquire the surrounding environment information in front of the bicycle 1 from the surrounding environment sensor 24. Here, the surrounding environment information in front of the bicycle 1 includes road information that is information indicating environment of a road. The road information includes information indicating a lighting state of a traffic light provided to the road. The information indicating the lighting state of the traffic light is, for example, information indicating whether each traffic light provided to the road is lit in green, yellow, or red. Then, the execution unit 32 can determine whether the traffic light lit in red is present in front of the bicycle 1 based on the information indicating the lighting state of the traffic light provided to the road.

For example, when the traffic light lit in red is present within a predetermined distance ahead of the bicycle 1 on the road on which the bicycle 1 runs, the execution unit 32 determines that the traffic light lit in red is present in front of the bicycle 1. On the other hand, when the traffic light lit in red is not present within the predetermined distance ahead of the bicycle 1 on the road on which the bicycle 1 runs, the execution unit 32 determines that the traffic light lit in red is not present in front of the bicycle 1.

If it is determined that the traffic light lit in red is present in front of the bicycle 1 (Step S104/YES), the process proceeds to Step S105. On the other hand, if it is determined that the traffic light lit in red is not present in front of the bicycle 1 (Step S104/NO), the process proceeds to Step S106.

If it is determined as YES at Step S104, at Step S105, the execution unit 32 executes the downshift operation, and the process returns to Step S102.

As described above, the downshift operation is the operation of automatically reducing the gear ratio of the transmission 19 and corresponds to one example of the gear ratio adjustment operation. In the downshift operation, the execution unit 32 controls the operation of the transmission 19 to automatically reduce the gear ratio of the transmission 19 from the current gear ratio to the target gear ratio.

Here, the target gear ratio for the gear ratio adjustment operation is set in advance, for example, by the rider of the bicycle 1. That is, the execution unit 32 determines the target gear ratio based on, for example, manual setting information set by the rider of the bicycle 1. The manual setting information is information on manual setting by the rider of the bicycle 1. For example, the rider can use the input device 21 to perform operation for setting the target gear ratio. In this case, the manual setting information is information indicating the above-described operation. Therefore, the rider can manually set the target gear ratio by determining the target gear ratio based on the manual setting information. For example, the target gear ratio for the downshift operation is the smallest gear ratio among the gear ratios that can be taken by the transmission 19.

Note that, as will be described later, the execution unit 32 may automatically determine the target gear ratio for the gear ratio adjustment operation based on information other than the manual setting information.

As described above, in the example in Fig. 3, when the traffic light lit in red is present in front of the bicycle 1, the downshift operation is executed, and the gear ratio of the transmission 19 automatically decreases to the target gear ratio. Accordingly, the gear ratio of the transmission 19 can be reduced in advance before the bicycle 1 stops in front of the traffic light. Therefore, it can be suppressed that the bicycle 1 stops in a state in which the gear ratio of the transmission 19 is large, and thus a situation in which the pedaling force required to start the bicycle 1 is large when the bicycle 1 starts can be suppressed. In this way, the target gear ratio for the gear ratio adjustment operation may correspond to, for example, a gear ratio that may facilitate starting of the bicycle 1.

Here, in the bicycle 1, although the gear ratio of the transmission 19 can be switched during running, the gear ratio of the transmission 19 cannot be switched in a stopping state. Therefore, it is important to switch the gear ratio of the transmission 19 in advance before the bicycle 1 stops.

If it is determined as NO at Step S104, at Step S106, the execution unit 32 determines whether an uphill road is present in front of the bicycle 1 based on the surrounding environment information in front of the bicycle 1.

As described above, the surrounding environment information in front of the bicycle 1 includes the road information that is the information indicating the environment of the road. Here, the road information includes information on a gradient of the road. The information on the gradient of the road may be, for example, information directly indicating the gradient of the road or information substantially convertible into the gradient of the road. Then, the execution unit 32 can determine whether the uphill road is present in front of the bicycle 1 based on the information on the gradient of the road.

For example, when the uphill road is present within a predetermined distance ahead of the bicycle 1 on the road on which the bicycle 1 runs, the execution unit 32 determines that the uphill road is present in front of the bicycle 1. On the other hand, when the uphill road is not present within the predetermined distance ahead of the bicycle 1 on the road on which the bicycle 1 runs, the execution unit 32 determines that the uphill road is not present in front of the bicycle 1. Note that, for example, the execution unit 32 may determine that a road that is inclined upward toward the front and has a gradient of a predetermined value or more is an uphill road.

If it is determined that the uphill road is not present in front of the bicycle 1 (Step S106/NO), the process returns to Step S102. On the other hand, if it is determined that the uphill road is present in front of the bicycle 1 (S106/YES), the process proceeds to Step S105.

If it is determined as YES at Step S106, at Step S105, the execution unit 32 executes the downshift operation, and the process returns to Step S102.

As described above, in the example in Fig. 3, when the uphill road is present in front of the bicycle 1, the downshift operation is executed, and the gear ratio of the transmission 19 automatically decreases to the target gear ratio. Accordingly, the gear ratio of the transmission 19 can be reduced in advance before the bicycle 1 enters the uphill road. Therefore, it can be suppressed that the bicycle 1 enters the uphill road in the state in which the gear ratio of the transmission 19 is large, and thus it is possible to suppress an increase in the pedaling force required to cause the bicycle 1 to run on the uphill road on which the pedaling force required to cause the bicycle 1 to run is likely to increase. In this way, the target gear ratio for the gear ratio adjustment operation may correspond to, for example, a gear ratio that may facilitate running of the bicycle 1 on the uphill road.

The processing example executed by the control apparatus 30 has been described above. However, the processing executed by the control apparatus 30 may be processing with a change made to the processing example described above. Below, processing other than the processing described above is described.

In the example described above, as the road information used as a basis for determining whether to execute the gear ratio adjustment operation, the information indicating the lighting state of the traffic light provided to the road or the information on the gradient of the road is used. However, the execution unit 32 may start the execution of the gear ratio adjustment operation based on road information other than the information described above.

For example, the road information may include information on a shape of the road. Then, the execution unit 32 may start the execution of the gear ratio adjustment operation based on the information on the shape of the road. The information on the shape of the road includes, for example, information such as a position of a curved road present on the road and a magnitude of a curvature of the curved road. For example, the execution unit 32 may execute the downshift operation as the gear ratio adjustment operation when a curved road having a certain degree of curvature is present within a predetermined distance ahead of the bicycle 1 on the road on which the bicycle 1 runs. Accordingly, the gear ratio of the transmission 19 can be reduced in advance before the bicycle 1 enters the curved road. Therefore, the gear ratio of the transmission 19 can be small when the bicycle 1 decelerates as the bicycle 1 enters the curved road, and thus a situation in which large pedaling force is required to accelerate the bicycle 1 after deceleration can be suppressed.

In the example described above, as the surrounding environment information used as a basis for determining whether to execute the gear ratio adjustment operation, the road information is used. However, the execution unit 32 may start the execution of the gear ratio adjustment operation based on surrounding environment information other than the road information.

For example, the surrounding environment information may include information on a target object in front of the bicycle 1. Then, the execution unit 32 may start the execution of the gear ratio adjustment operation based on the information on the target object in front of the bicycle 1. The information on the target object in front of the bicycle 1 includes, for example, information such as a position of a target object such as another vehicle present in front of the bicycle 1, and relative speed between the bicycle 1 and the target object. For example, when another vehicle runs in front of the bicycle 1 and it is predicted that the bicycle 1 is going to decelerate in the future to avoid contact with the another vehicle, the execution unit 32 may execute the downshift operation as the gear ratio adjustment operation. Accordingly, the gear ratio of the transmission 19 can be reduced in advance before the bicycle 1 decelerates. Therefore, the situation in which large pedaling force is required to accelerate the bicycle 1 after deceleration can be suppressed. Note that the execution unit 32 can predict whether the bicycle 1 is going to decelerate in the future to avoid contact with another vehicle based on, for example, information on a relative position and relative speed between the bicycle 1 and the another vehicle in the information on the target object in front of the bicycle 1.

In the example described above, the downshift operation is not executed if it is determined that the bicycle 1 is not under deceleration, and the downshift operation is executed only if it is determined that the bicycle 1 is under deceleration. That is, in the above-described example, the execution unit 32 prohibits the downshift operation based on the speed information of the bicycle 1. Here, the rider accelerates the bicycle 1 by pedaling the pedals 15 with the feet. That is, it is assumed that the pedal 15 is depressed by the rider's foot during acceleration of the bicycle 1. When the downshift operation is executed in such a situation, operational feeling of the pedal 15 suddenly decreases, and the rider's foot may come off the pedal 15. Therefore, by executing the downshift operation only when the bicycle 1 is under deceleration, it can be suppressed that the rider's foot comes off the pedal 15 and safety can be improved.

From a similar viewpoint to that described above, the execution unit 32 may prohibit the downshift operation based on pedaling force information of the pedal 15 provided to the bicycle 1. The pedaling force information of the pedal 15 may be information directly indicating the pedaling force acting on the pedal 15, or may be information substantially convertible into the pedaling force acting on the pedal 15. For example, the acquisition unit 31 can acquire the information directly indicating the pedaling force acting on the pedal 15 from the pedaling force sensor 25. The execution unit 32 may prohibit the downshift operation when the pedaling force acting on the pedal 15 is higher than a threshold value. The threshold value may be set to, for example, a value at which it can be determined that the rider's foot is highly likely to come off the pedal 15 when the downshift operation is executed. By prohibiting the downshift operation when the pedaling force acting on the pedal 15 is higher than the threshold value, it can be suppressed that the rider's foot comes off the pedal 15 and safety can be improved.

In the above description, as one example of the gear ratio adjustment operation, the downshift operation of automatically reducing the gear ratio has been described. However, the gear ratio adjustment operation may be the upshift operation of automatically increasing the gear ratio. Then, the execution unit 32 may start execution of the upshift operation based on the surrounding environment information in front of the bicycle 1.

The execution unit 32 may start the execution of the upshift operation based on, for example, the road information. For example, the execution unit 32 may execute the upshift operation if it is determined that a downhill road is present in front of the bicycle 1. Accordingly, the gear ratio of the transmission 19 can be increased in advance before the bicycle 1 enters the downhill road. Therefore, it can be suppressed that the bicycle 1 enters the downhill road in a state in which the gear ratio of the transmission 19 is small, and thus it is possible to suppress an increase in the operation amount of the pedal 15 on the downhill road on which the pedaling force required to cause the bicycle 1 to run is likely to decrease.

For example, when the downhill road is present within a predetermined distance ahead of the bicycle 1 on the road on which the bicycle 1 runs, the execution unit 32 determines that the downhill road is present in front of the bicycle 1. Further, for example, the execution unit 32 may determine that a road that is inclined downward toward the front and has a gradient of a predetermined value or more is a downhill road.

Further, the execution unit 32 may start the execution of the upshift operation based on, for example, the information on the target object in front of the bicycle 1. For example, when another vehicle runs in front of the bicycle 1 and the another vehicle accelerates, the execution unit 32 may execute the upshift operation as the gear ratio adjustment operation. Accordingly, when the rider accelerates the bicycle 1 as the another vehicle accelerates, the rider can accelerate the bicycle 1 without increasing the operation amount of the pedal 15.

Note that the execution unit 32 may execute the upshift operation when a rotational frequency of the pedal 15 is greater than a predetermined value. Accordingly, a situation in which the operation amount of the pedal 15 becomes excessively large can be suppressed.

In the example described above, the target gear ratio for the gear ratio adjustment operation is set in advance by the rider of the bicycle 1 (that is, the execution unit 32 determines the target gear ratio based on the manual setting information set by the rider). However, the execution unit 32 may automatically determine the target gear ratio for the gear ratio adjustment operation based on information other than the manual setting information.

The execution unit 32 may determine the target gear ratio based on, for example, the surrounding environment information. For example, in the example in which the downshift operation is executed when the traffic light lit in red is present in front of the bicycle 1, the execution unit 32 may determine the target gear ratio based on the information on the gradient of the road. As described above, in this example, the gear ratio of the transmission 19 can be reduced in advance before the bicycle 1 stops in front of the traffic light. For example, when the road before the traffic light (that is, the road on which the bicycle 1 is predicted to stop) is an uphill road, the execution unit 32 may set the target gear ratio to be smaller than that in a case in which the road before the traffic light is a downhill road. Further, when the road before the traffic light is the uphill road, for example, the execution unit 32 may decrease the target gear ratio as the magnitude of the gradient of the road increases. Accordingly, the pedaling force required to start the bicycle 1 can be optimized in accordance with the gradient of the road.

The execution unit 32 may determine the target gear ratio based on, for example, posture information of the bicycle 1. The posture information is information on the posture of the bicycle 1. For example, the acquisition unit 31 can acquire the posture information from the inertial measurement unit 23. Here, the posture information includes, for example, information on the pitch angle of the bicycle 1. For example, the execution unit 32 may determine the target gear ratio by regarding the pitch angle of the bicycle 1 as the road on which the bicycle 1 runs. For example, in the example in which the downshift operation is executed when the traffic light lit in red is present in front of the bicycle 1, when the road on which the bicycle 1 runs is determined to be an uphill road based on the pitch angle, the execution unit 32 may set the target gear ratio to be smaller than that in a case in which the road on which the bicycle 1 runs is determined to be a downhill road based on the pitch angle. When the road on which the bicycle 1 runs is determined to be the uphill road based on the pitch angle, for example, the execution unit 32 may decrease the target gear ratio as the pitch angle increases.

Here, whether the gear ratio adjustment operation is executable may be set in advance, for example, by the rider of the bicycle 1. That is, the execution unit 32 may prohibit the gear ratio adjustment operation based on, for example, the manual setting information set by the rider of the bicycle 1. For example, the rider can use the input device 21 to perform operation for setting whether the gear ratio adjustment operation is executable. In this case, the manual setting information is information indicating the above-described operation. Therefore, the rider can manually set whether the gear ratio adjustment operation is executable by prohibiting the gear ratio adjustment operation based on the manual setting information.

### Effects of Control Apparatus

Effects of the control apparatus 30 according to an embodiment of the invention is described.

The control apparatus 30 includes the execution unit 32 that executes the gear ratio adjustment operation of automatically adjusting the gear ratio of the transmission 19 to be the target gear ratio. The execution unit 32 starts the execution of the gear ratio adjustment operation based on the surrounding environment information in front of the bicycle 1. Accordingly, the gear ratio of the transmission 19 can be optimized in accordance with the situation in front of the bicycle 1. In this way, according to this embodiment, the rider can be assisted in driving the bicycle 1 including the transmission 19.

Preferably, in the control apparatus 30, the surrounding environment information includes the road information that is the information indicating the environment of the road. Accordingly, by focusing on the environment of the road in front of the bicycle 1, optimization of the gear ratio of the transmission 19 can appropriately be realized in accordance with the situation in front of the bicycle 1.

Preferably, in the control apparatus 30, the road information includes the information indicating the lighting state of the traffic light provided to the road. Accordingly, by focusing on the lighting state of the traffic light provided to the road in front of the bicycle 1, the optimization of the gear ratio of the transmission 19 can appropriately be realized in accordance with the situation in front of the bicycle 1.

Preferably, in the control apparatus 30, the road information includes the information on the gradient of the road. Accordingly, by focusing on the gradient of the road in front of the bicycle 1, the optimization of the gear ratio of the transmission 19 can appropriately be realized in accordance with the situation in front of the bicycle 1.

Preferably, in the control apparatus 30, the road information includes the information on the shape of the road. Accordingly, by focusing on the shape of the road in front of the bicycle 1, the optimization of the gear ratio of the transmission 19 can appropriately be realized in accordance with the situation in front of the bicycle 1.

Preferably, in the control apparatus 30, the surrounding environment information includes the information on the target object in front of the bicycle 1. Accordingly, by focusing on the information on the target object in front of the bicycle 1, the optimization of the gear ratio of the transmission 19 can appropriately be realized in accordance with the situation in front of the bicycle 1.

Note that the execution unit 32 may start the execution of the gear ratio adjustment operation by using all types of information among the various types of surrounding environment information described above, or may start the execution of the gear ratio adjustment operation by using any one or some types of information among the various types of surrounding environment information described above.

Preferably, in the control apparatus 30, the gear ratio adjustment operation includes the downshift operation of automatically reducing the gear ratio. Accordingly, when it is highly necessary to reduce the gear ratio of the transmission 19 in advance (for example, when the bicycle 1 is predicted to stop in the future), the gear ratio of the transmission 19 can be reduced in advance.

Preferably, in the control apparatus 30, the execution unit 32 prohibits the downshift operation based on the speed information of the bicycle 1. Accordingly, it can be suppressed that the rider's foot comes off the pedal 15, and safety can be improved.

Preferably, in the control apparatus 30, the execution unit 32 prohibits the downshift operation based on the pedaling force information of the pedal 15 provided to the bicycle 1. Accordingly, it can be suppressed that the rider's foot comes off the pedal 15, and safety can be improved.

Preferably, in the control apparatus 30, the gear ratio adjustment operation includes the upshift operation of automatically increasing the gear ratio. Accordingly, when it is highly necessary to increase the gear ratio of the transmission 19 in advance (for example, when the bicycle 1 is predicted to enter a downhill road in the future), the gear ratio of the transmission 19 can be increased in advance.

Preferably, in the control apparatus 30, the execution unit 32 determines the target gear ratio based on the surrounding environment information. Accordingly, the target gear ratio can be optimized in accordance with the situation in front of the bicycle 1.

Preferably, in the control apparatus 30, the execution unit 32 determines the target gear ratio based on the posture information of the bicycle 1. Accordingly, the target gear ratio can be optimized in accordance with the posture of the bicycle 1.

Preferably, in the control apparatus 30, the execution unit 32 determines the target gear ratio based on the manual setting information set by the rider of the bicycle 1. Accordingly, the rider can set the target gear ratio in accordance with his/her intention.

Preferably, in the control apparatus 30, the execution unit 32 prohibits the gear ratio adjustment operation based on the manual setting information set by the rider of the bicycle 1. Accordingly, the rider can set whether the gear ratio adjustment operation is executable in accordance with his/her intention.

The invention is not limited to the description of the embodiment. For example, only part of the embodiment may be implemented.

## Claims

1. A control apparatus (30) configured to control behavior of a bicycle (1) including a transmission (19), comprising:
an execution unit (32) configured to execute gear ratio adjustment operation of automatically adjusting a gear ratio of the transmission (19) to be a target gear ratio, wherein
the execution unit (32) starts execution of the gear ratio adjustment operation based on surrounding environment information in front of the bicycle (1).

2. The control apparatus according to claim 1, wherein the surrounding environment information includes road information that is information indicating environment of a road.

3. The control apparatus according to claim 2, wherein the road information includes information indicating a lighting state of a traffic light provided to the road.

4. The control apparatus according to claim 2, wherein the road information includes information on a gradient of the road.

5. The control apparatus according to claim 2, wherein the road information includes information on a shape of the road.

6. The control apparatus according to claim 1, wherein the surrounding environment information includes information on a target object in front of the bicycle (1).

7. The control apparatus according to any one of claims 1 to 6, wherein the gear ratio adjustment operation includes downshift operation of automatically reducing the gear ratio.

8. The control apparatus according to claim 7, wherein the execution unit (32) prohibits the downshift operation based on speed information of the bicycle (1).

9. The control apparatus according to claim 7, wherein the execution unit (32) prohibits the downshift operation based on pedaling force information of a pedal (15) provided to the bicycle (1).

10. The control apparatus according to any one of claims 1 to 6, wherein the gear ratio adjustment operation includes upshift operation of automatically increasing the gear ratio.

11. The control apparatus according to any one of claims 1 to 6, wherein the execution unit (32) determines the target gear ratio based on the surrounding environment information.

12. The control apparatus according to any one of claims 1 to 6, wherein the execution unit (32) determines the target gear ratio based on posture information of the bicycle (1).

13. The control apparatus according to any one of claims 1 to 6, wherein the execution unit (32) determines the target gear ratio based on manual setting information set by a rider of the bicycle (1).

14. The control apparatus according to any one of claims 1 to 6, wherein the execution unit (32) prohibits the gear ratio adjustment operation based on manual setting information set by a rider of the bicycle (1).

15. A method for controlling behavior of a bicycle (1) including a transmission (19), comprising the steps of:
executing by an execution unit (32) of a control apparatus (30) gear ratio adjustment operation of automatically adjusting a gear ratio of the transmission (19) to be a target gear ratio; and
starting by the execution unit (32) the executing the gear ratio adjustment operation based on surrounding environment information in front of the bicycle (1).
